# EUROPÄISCHE PATENTANMELDUNG

(11) **EP 2 112 204 A1**
(43) Veröffentlichungstag der Anmeldung: **28.10.2009**
(21) Anmeldenummer: 08152191.6
(22) Anmeldetag: 01.03.2008
(51) Int. Cl.: C09C 1/30, B41M 5/52

(54) **Aufzeichnungsmaterial für den Tintenstrahldruck**

(71) Anmelder: ILFORD Imaging Switzerland GmbH, 1723 Marly 1 (CH)
(72) Erfinder: Fürholz, Urs, 1723, Marly (CH); Ruffieux, Vincent, 1724, Le Mouret (CH); Schär, Meinrad, 1731, Ependes (CH)

(57) **Zusammenfassung**

Es wird ein Verfahren zur Herstellung von Siliziumdioxid-Dispersionen beschrieben, das dadurch gekennzeichnet ist, dass die Siliziumdioxidoberfläche mit den Reaktionsprodukten aus mindestens einer Verbindung des dreiwertigen Aluminiums oder des vierwertigen Zirkoniums oder eines Gemisches davon und mindestens eines Aminoorganosilans gemäss Anspruch 1 modifiziert wird, welche zuvor in einem eigenen Reaktionsschritt gebildet wurden. Weiter bezieht sich die vorliegende Erfindung auf Aufzeichnungsmaterialien für den Tintenstrahldruck, welche in einer Tintenaufnahmeschicht eine derartige Dispersion enthalten, sowie auf Beschichtungsmassen zur Herstellung solcher Aufzeichnungsmaterialien.

## Beschreibung

### Technisches Gebiet

Die vorliegende Erfindung bezieht sich auf ein Verfahren zur Herstellung von Siliziumdioxid-Dispersionen, das dadurch gekennzeichnet ist, dass die Siliziumdioxidoberfläche mit den Reaktionsprodukten aus mindestens einer Verbindung des dreiwertigen Aluminiums oder des vierwertigen Zirkoniums oder eines Gemisches davon und mindestens eines Aminoorganosilans gemäss Anspruch 1 modifiziert wird, welche zuvor in einem eigenen Reaktionsschritt gebildet wurden. Weiter bezieht sich die vorliegende Erfindung auf Aufzeichnungsmaterialien für den Tintenstrahldruck, welche in einer Tintenaufnahmeschicht eine derartige Dispersion enthalten, sowie auf Beschichtungsmassen zur Herstellung solcher Aufzeichnungsmaterialien.

### Stand der Technik

Es gibt im wesentlichen zwei unterschiedliche Verfahren beim Tintenstrahldruck, nämlich den kontinuierlichen und den nichtkontinuierlichen Tintenstrahldruck.

Beim kontinuierlichen Tintenstrahldruck wird unter Druck aus einer Düse ein Tintenstrahl ausgestossen, der in einem gewissen Abstand von der Düse in einzelne Tröpfchen zerfällt. Die einzelnen Tröpfchen werden, je nachdem, ob eine Bildstelle bedruckt werden soll oder nicht, in einen Auffangbehälter abgelenkt oder auf das Aufnahmematerial aufgebracht. Dies geschieht beispielsweise dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, bei dem ungeladene Tröpfchen im Auffangbehälter aufgefangen werden.

Beim nichtkontinuierlichen Verfahren, dem sogenannten "Drop on demand", werden die Tintentropfen nur dann erzeugt und aus der Düse ausgestossen, wenn auf Grund der digitalen Daten ein Bildpunkt dargestellt werden muss.

Heutige Tintenstrahldrucker müssen aus wirtschaftlichen Gründen immer schneller drucken können. Für solche Drucker geeignete Aufzeichnungsmaterialien müssen deshalb die Tinten besonders rasch aufnehmen können. Für diesen Zweck besonders geeignet sind Aufzeichnungsmaterialien, die nanoporöse anorganische Verbindungen, vorzugsweise Oxide, insbesondere Aluminiumoxide oder Siliziumdioxid, oder Oxid/hydroxide, insbesondere Aluminiumoxid/hydroxide, enthalten. Solche Materialien sind als "nanoporöse" Aufzeichnungsmaterialien bekannt. Solche heute erhältlichen Aufzeichnungsmaterialien erfüllen nicht alle an sie gestellten Anforderungen. Insbesondere bei Verwendung von Farbstofftinten müssen die Wasserfestigkeit und die Diffusionsfestigkeit der auf diese Materialien gedruckten Bilder verbessert werden. Bei Verwendung von Pigmenttinten muss der Oberflächenglanz der bedruckten Bilder verbessert werden, da sehr häufig wegen schlechter Verträglichkeit der Tinte mit der Aufnahmeschicht nicht die gewünschte Photoqualität erreicht wird. Besonders störend ist der unterschiedliche Glanz verschiedener Bildstellen. Zudem ist die industrielle Herstellbarkeit der bisher bekannten nanoporösen Aufzeichnungsmaterialien ungenügend.
In vielen Fällen zeigen solche unbedruckten Aufzeichnungsmaterialien bei der Lagerung in Kartonschachteln eine starke, unerwünschte Gelbfärbung.

In der Patentanmeldung DE 10'020'346 wird ein Aufzeichnungsmaterial vorgeschlagen, das in der Gasphase hergestelltes Siliziumdioxid mit einer Primärpartikelgrösse von höchstens 20 nm enthält, worin die Oberfläche des Siliziumdioxids mit Polyaluminiumhydroxychlorid modifiziert wurde.
In der Patentanmeldung WO 00/20'221 wird die Umsetzung von in der Gasphase hergestelltem Siliziumdioxid mit Aluminiumchlorhydrat beschrieben. Das umgesetzte Siliziumdioxid wird anschliessend in eine Tintenaufnahmeschicht von nanoporösen Aufzeichnungsmaterialien für den Tintenstrahldruck eingebracht.

Die Patentanmeldung WO 02/094'573 beschreibt die Verwendung von in der Gasphase hergestelltem Siliziumdioxid, welches mit Aminoorganosilanen umgesetzt wurde, in Aufzeichnungsmaterialien für den Tintenstrahldruck.
Die Patentanmeldung WO 01/05'599 beschreibt die Verwendung von Siliziumdioxid-Pigmenten, welche mit kationischen Aminoorganosiloxanen umgesetzt wurden, in Aufzeichnungsmaterialien für den Tintenstrahldruck.
Die Patentanmeldung EP 0'983'867 beschreibt die Verwendung von kolloidalem Siliziumdioxid, welches mit Silanen der allgemeinen Formel (R₁)ₙSi(OR₂)₄₋ₙ, worin mindestens einer der Substituenten R₁ eine Aminogruppe enthält, umgesetzt wurde, in Aufzeichnungsmaterialien für den Tintenstrahldruck.

Die Patentanmeldung EP 1'655'348 beschreibt die Verwendung von pyrogenem Siliziumdioxid, dessen Oberfläche mit den Reaktionsprodukten aus einer Verbindung des dreiwertigen Aluminiums und mindestens eines Aminoorganosilans umgesetzt wurde, in Aufzeichnungsmaterialien für den Tintenstrahldruck.
Speziell beanspruchte Aminoorganosilane sind 3-Aminopropyltrimethoxysilan, N-(2-Aminoethyl)-3-aminopropyltrimethoxysilan, (3-Triethoxysilylpropyl)-diethylentriamin, 3-Aminopropyltriethoxysilan, N-(2-Aminoethyl)-3-amino-propyltriethoxysilan und (3-Triethoxysilylpropyl)-diethylentriamin.

Die erfindungsgemässen Aufzeichnungsmaterialien zeigen eine wesentlich Verbesserung fast aller Eigenschaften im Vergleich zu Aufzeichnungsmaterialien des Stands der Technik, in welchen die Oberfläche des Siliziumdioxids mit Aluminiumchlorhydrat oder mit einem Aminoorganosilan modifiziert worden ist.

### Zusammenfassung der Erfindung

Ziel der Erfindung ist die Bereitstellung von nanoporösen Aufzeichnungsmaterialien mit verbesserter Bildqualität (Grösse des Farbraums), verbesserter Wasserfestigkeit und verbesserter Diffusionsfestigkeit der bedruckten Aufzeichnungsmaterialien bei Verwendung von Tinten auf Farbstoffbasis.
Ein weiteres Ziel der Erfindung ist die Bereitstellung von nanoporösen Aufzeichnungsmaterialien mit verminderten Glanzunterschieden zwischen Bildstellen unterschiedlicher Farbe und Dichte bei Verwendung von Tinten auf Pigmentbasis. Ein weiteres Ziel der Erfindung ist eine verbesserte Herstellbarkeit und Haltbarkeit der erfindungsgemässen Dispersionen von Siliziumdioxid, deren Oberfläche mit den Reaktionsprodukten aus mindestens einer Verbindung des dreiwertigen Aluminiums oder des vierwertigen Zirkoniums oder eines Gemisches davon und mindestens eines Aminoorganosilans gemäss Anspruch 1 modifiziert wurde, eine verbesserte Herstellbarkeit und Haltbarkeit der auf den Träger aufzubringenden Beschichtungslösungen sowie eine verbesserte Gussqualität der erfindungsgemässen Aufzeichnungsmaterialien.
Ein wesentliches Ziel ist die Herstellung von Aufzeichnungsmaterialien, welche im unbedruckten Zustand bei der Lagerung in Kartonschachteln keine Gelbfärbung zeigen.

Ein solches Aufzeichnungsmaterial besteht aus einem Träger und mindestens einer darauf aufliegenden Tintenaufnahmeschicht, welche nanoporöses, oberflächenmodifiziertes Siliziumdioxid enthält.
Wir haben nun überraschend gefunden, dass alle diese Verbesserungen mit Dispersionen von nanoporösem Siliziumdioxid erhalten werden, dessen Oberfläche mit den Reaktionsprodukten einer Verbindung des dreiwertigen Aluminiums oder des vierwertigen Zirkoniums oder eines Gemisches davon und mindestens eines Aminoorganosilans gemäss Anspruch 1 modifiziert worden ist.
Die erfindungsgemässen nanoporösen Aufzeichnungsmaterialien für den Tintenstrahldruck enthalten neben dem oberflächenmodifizierten nanoporösen Siliziumdioxid eines oder mehrere Bindemittel.

### Ausführliche Beschreibung der Erfindung

Wir haben überraschend gefunden, dass ein nanoporöses Aufzeichnungsmaterial für den Tintenstrahldruck, welches in einer Tintenaufnahmeschicht eine Dispersion von nanoporösem Siliziumdioxid, dessen Oberfläche mit den Reaktionsprodukten aus mindestens einer Verbindung des dreiwertigen Aluminiums (beispielsweise Aluminiumchlorhydrat) oder des vierwertigen Zirkoniums (beispielsweise Zirkonylchlorid ZrOCl₂) oder eines Gemisches davon und mindestens eines Aminoorganosilans gemäss Anspruch 1 modifiziert worden ist, im unbedruckten Zustand bei der Lagerung in Kartonschachteln keine Gelbfärbung zeigt.

Das in den erfindungsgemässen Aufzeichnungsmaterialien verwendete nanoporöse synthetische Siliziumdioxid kann entweder in einem Nassverfahren durch Ausfällung (ausgefälltes Siliziumdioxid) oder in einem Gasphasenverfahren (pyrogenes Siliziumdioxid) hergestellt werden.
Ausgefälltes Siliziumdioxid kann beispielsweise im Nassverfahren durch Metathese von Natriumsilikat durch eine Säure oder durch Hindurchleiten durch eine Schicht aus Ionenaustauscherharz als Siliziumdioxidsol, durch Erhitzen und Reifen dieses Siliziumdioxidsols oder durch Gelieren eines Siliziumdioxidsols hergestellt werden.
Das Gasphasenverfahren durch Flammenpyrolyse zur Herstellung pyrogenen Siliziumdioxids wird auch als Trockenverfahren im Gegensatz zum Nassverfahren bezeichnet. Bei diesem Verfahren wird beispielsweise Siliziumtetrachlorid zusammen mit Wasserstoff und Sauerstoff zu Siliziumdioxid und Salzsäure umgesetzt. In diesem Verfahren können auch Silane wie beispielsweise Methyltrichlorsilan oder Trichlorsilan an Stelle von Siliziumtetrachlorid oder in Kombination mit Siliziumtetrachlorid eingesetzt werden.
Vorzugsweise wird in den erfindungsgemässen Aufzeichnungsmaterialien pyrogenes Siliziumdioxid verwendet.
Pyrogenes Siliziumdioxid besteht aus Aggregaten kleiner Primärteilchen. Diese Primärteilchen sind selber nicht porös. Die Aggregate sind hingegen porös und deshalb im Stande, rasch grosse Flüssigkeitsmengen zu absorbieren.
Die Aggregate des pyrogenen Siliziumdioxids haben normalerweise eine Grösse (mittlerer Durchmesser) von mehr als 100 nm. Bevorzugt sind Teilchen mit einer Grösse zwischen 100 nm und 500 nm, besonders bevorzugt mit einer Grösse zwischen 150 nm und 250 nm. Diese Grössenangaben beziehen sich auf die Aggregate. Die Primärteilchen haben eine Grösse zwischen 1 nm und 100 nm. Bevorzugt wird eine Grösse zwischen 1 nm und 30 nm, besonders bevorzugt zwischen 5 nm und 15 nm.
Pyrogenes Siliziumdioxid hat eine spezifische Oberfläche zwischen 20 m²/g und 400 m²/g. Bevorzugt wird eine spezifische Oberfläche zwischen 50 m²/g und 400 m²/g. Besonders bevorzugt wird eine spezifische Oberfläche zwischen 90 m²/g und 330 m²/g. Die spezifische Oberfläche wird nach dem BET-Verfahren bestimmt, wie es von S. Brunauer, P. H. Emmet und I. Teller in "Adsorption of Gases in Multimolecular Layers", Journal of the American Chemical Society 60, 309 (1938) beschrieben worden ist.

Zur Herstellung von erfindungsgemäss oberflächenmodifiziertem Siliziumdioxid für die erfindungsgemässen Aufzeichnungsmaterialien wird beispielsweise pyrogenes Siliziumdioxid bei hohen Scherraten zu einer zur Hauptsache wässrigen Lösung, welche die Reaktionsprodukte mindestens einer Verbindung des dreiwertigen Aluminiums (beispielsweise Aluminiumchlorhydrat) oder des vierwertigen Zirkoniums (beispielsweise Zirkonylchlorid) und mindestens eines Aminoorganosilans gemäss Anspruch 1 enthält, zugegeben. Dabei entsteht unter geeigneten Bedingungen eine oberflächenmodifizierte Dispersion von pyrogenem Siliziumdioxid, die nicht koaguliert. Das Gemisch, welches die Reaktionsprodukte einer Verbindung des dreiwertigen Aluminiums (beispielsweise Aluminiumchlorhydrat) oder des vierwertigen Zirkoniums (beispielsweise Zirkonylchlorid) und mindestens eines Aminoorganosilans gemäss Anspruch 1 enthält, zeigt eine hohe Pufferkapazität. Das basische Aminoorganosilan neutralisiert die bei der Hydrolyse der Verbindung des dreiwertigen Aluminiums (beispielsweise Aluminiumchlorhydrat) oder des vierwertigen Zirkoniums (beispielsweise Zirkonylchlorid) entstehende Salzsäure.

Geeignete Geräte für die Herstellung der oberflächenmodifizierten Dispersionen sind beispielsweise konventionelle Dispergiergeräte wie Nanomizer^{®}, Ultimizer^{®}, Manton-Gaulin^{®}, Ystral Conti^{®}, Dyno-Mill^{®} und ähnliche. Die erwähnten Geräte können einzeln oder als Kombination zweier oder mehrerer dieser Geräte verwendet werden.
Bevorzugt ist die Dispergierung in zwei Schritten, wobei im ersten Schritt eine Hochdruckhomogenisator wie beispielsweise Manton-Gaulin^{®} oder Nanomizer^{®} verwendet wird und die Dispersion nachher noch eine Kugelmühle wie beispielsweise Dyno-Mill^{®} durchläuft. Die in der Kugelmühle verwendeten Kugeln bestehen vorzugsweise aus Zirkoniumdioxid.

Zur Herstellung der zur Hauptsache wässrigen Lösungen wird vorzugsweise deionisiertes Wasser verwendet. Dem Wasser können mit Wasser mischbare Lösungsmittel wie beispielsweise niedrige Alkohole (Methanol, Ethanol, Propanol usw.) oder Ketone wie beispielsweise Aceton zugesetzt werden.
Die zur Umsetzung verwendeten Reaktionsprodukte aus mindestens einer Verbindung des dreiwertigen Aluminiums (beispielsweise Aluminiumchlorhydrat) oder des vierwertigen Zirkoniums (beispielsweise Zirkonylchlorid) oder eines Gemisches davon und mindestens eines Aminoorganosilans gemäss Anspruch 1 können sowohl durch Zugabe des Aminoorganosilans zu einer wässrigen Lösung der Verbindung des dreiwertigen Aluminiums (beispielsweise Aluminiumchlorhydrat) oder des vierwertigen Zirkoniums (beispielsweise Zirkonylchlorid) oder eines Gemisches davon als auch in der umgekehrten Reihenfolge hergestellt werden. An Stelle der Verbindungen des dreiwertigen Aluminium und/oder vierwertigen Zirkoniums können Komplexverbindungen, welche dreiwertiges Aluminium und vierwertiges Zirkonium enthalten (beispielsweise Aluminium-Zirkonium-Oktachlorohydrat) oder eine Mischung bestehend aus verschiedenen Aluminium- und/oder Zirkonium- und/oder Aluminium-Zirkonium-Komplexverbindungen zur Oberflächenmodifikation eingesetzt werden. Die Umsetzung der Verbindung des dreiwertigen Siliziums oder des vierwertigen Zirkoniums oder eines Gemisches davon und des Aminoorganosilans gemäss Anspruch 1 zu den Reaktionsprodukten erfolgt bei Temperaturen zwischen 0° C und 50° C während 5 Minuten bis 60 Minuten. Bevorzugt ist die Umsetzung bei Raumtemperatur während 10 Minuten bis 15 Minuten.

Zur Herstellung des erfindungsgemässen oberflächenmodifizierten Siliziumdioxids können beispielsweise auch die Reaktionsprodukte aus einer Verbindung des dreiwertigen Aluminiums (beispielsweise Aluminiumchlorhydrat) oder des vierwertigen Zirkoniums (beispielsweise Zirkonylchlorid) oder eines Gemisches davon und mindestens eines Aminoorganosilans gemäss Anspruch 1 zu einer wässrigen Dispersion von Siliziumdioxid zugegeben werden.

Besonders bevorzugt für die Oberflächenmodifizierung mit den Reaktionsprodukten aus einer Verbindung des dreiwertigen Aluminiums (beispielsweise Aluminiumchlorhydrat) oder des vierwertigen Zirkoniums (beispielsweise Zirkonylchlorid) oder eines Gemisches davon und mindestens eines Aminoorganosilans gemäss Anspruch 1 wird pyrogenes Siliziumdioxid.
An Stelle nur eines pyrogenen Siliziumdioxid-Pulvers kann eine Mischung verschiedener pyrogener Siliziumdioxid-Pulver mit unterschiedlichen Primärteilchengrössen eingesetzt werden. Die Umsetzung der Siliziumdioxid-Pulver mit den Reaktionsprodukten aus einer Verbindung des dreiwertigen Aluminiums (beispielsweise Aluminiumchlorhydrat) oder des vierwertigen Zirkoniums (beispielsweise Zirkonylchlorid) oder eines Gemisches davon und mindestens eines Aminoorganosilans gemäss Anspruch 1 kann entweder für jedes Siliziumdioxid-Pulver allein oder mit der Mischung der verschiedenen Siliziumdioxid-Pulver erfolgen.

Bevorzugte Verbindungen des dreiwertigen Aluminiums sind Aluminiumchlorid, Aluminiumnitrat, Aluminiumacetat, Aluminiumformiat, Aluminiumlactat und Aluminiumchlorhydrat.
Eine bevorzugte Zirkoniumverbindung ist Zirkonylchlorid (ZrOCl₂ · 8 H₂O).

Geeignete Aminoorganosilane sind Aminoorganosilane der Formel (I) 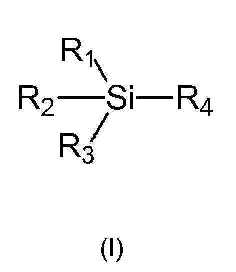 worin
- R₁, R₂, R₃: unabhängig voneinander für Wasserstoff, einen Hydroxylrest, einen unsubstituierten oder substituierten Alkylrest mit 1 bis 6 Kohlenstoff- atomen, einen unsubstituierten oder substituierten Arylrest, einen un- substituierten oder substituierten Alkoxylrest mit 1 bis 6 Kohlenstoff- atomen oder einen unsubstituierten oder substituierten Aryloxylrest stehen und
- R₄: für einen organischen Rest steht, der mit mindestens einer primären, sekundären oder tertiären Aminogruppe substituiert ist
und
eine bei Raumtemperatur hergestellte wässrige Lösung (200 g) von 0.01 Mol Aluminiumchlorhydrat, 0.02/k Mol Aminoorganosilan oder eines Gemisches von Aminoorganosilanen, 0.01 Mol Salzsäure und 0.02 Mol Glyoxal nach einer Lagerung während 24 Stunden bei Raumtemperatur bei einer Wellenlänge von 400 nm bei einer Schichtdicke von 1 cm eine Zunahme der Absorption von weniger als 0.05 zeigt, worin k die Anzahl der Aminogruppen im Aminoorganosilan oder einen Mittelwert der Anzahl der Aminogruppen der einzelnen Aminoorganosilane des Gemisches bedeutet.

Im Falle von substituierten R_{1'} R₂ und R₃ werden die Substituenten unabhängig voneinander aus der Gruppe bestehend aus Thiol, Sulfid und Polyalkylenoxid ausgewählt. Geeignet ausgewählte Substituenten erleichtern beispielsweise die Oberflächenmodifizierung des Siliziumdioxids (verbesserte Rheologie der Dispersionen und der Beschichtungslösungen) und verbessern die Produkteigenschaften wie beispielsweise die Beständigkeit gegenüber Luftschadstoffen, die Lichtechtheit und die physikalischen Eigenschaften.
Anstelle der monomeren Aminoorganosilane können ebenfalls deren Kondensationsprodukte eingesetzt werden, wobei die Kondensationsreaktionen sowohl zwischen identischen als auch zwischen unterschiedlichen Aminoorganosilanen erfolgen können.
Besonders geeignete Aminoorganosilane sind N-(n-Butyl)-aminopropyltrimethoxysilan (CAS-Nummer 31024-56-3), N-(Ethyl)-aminoisobutyltrimethoxysilan (CAS-Nummer 227085-51-0), N-(Cyclohexyl)-aminomethyltriethoxysilan (CAS-Nummer 26495-91-0) und deren Gemische.

Die Dispersion des erfindungsgemäss oberflächenmodifizierten Siliziumdioxids wird vorteilhaft direkt zur Herstellung der Beschichtungsmasse der Tintenaufnahmeschicht eines Aufzeichnungsmaterials für den Tintenstrahldruck verwendet. Die Dispersion muss deshalb mindestens 24 Stunden ohne Sedimentation des umgesetzten Siliziumdioxids stabil sein und darf keine starken Viskositätsänderungen zeigen. Insbesondere darf sie nicht gelieren oder koagulieren.
Die Dispersion enthält das erfindungsgemäss oberflächenmodifizierte Siliziumdioxid in einer Menge zwischen 5 und 50 Gewichtsprozent bezogen auf das Gesamtgewicht der Dispersion. Bevorzugt sind Mengen zwischen 10 und 30 Gewichtsprozent, besonders bevorzugt sind Mengen zwischen 15 und 25 Gewichtsprozent.

Die Oberflächenmodifizierung des Siliziumdioxids mit den Reaktionsprodukten aus mindestens einer Verbindung des dreiwertigen Aluminiums (beispielsweise Aluminiumchlorhydrat) oder des vierwertigen Zirkoniums (beispielsweise Zirkonylchlorid) oder eines Gemisches davon und mindestens eines Aminoorganosilans gemäss Anspruch 1 führt zu einer positiven Oberflächenladung des Siliziumdioxids. Die farbgebenden Verbindungen (Farbstoffe oder Pigmente) in Tinten für den Tintenstrahldruck enthalten häufig ionisierbare Gruppen wie SO₃H, COOH, PO₃H₂ usw., welche die Löslichkeit der Farbstoffe erhöhen oder die Dispergierbarkeit der Pigmente verbessern. Die Farbstoffe sind deshalb in der zur Hauptsache wässrigen Tintenflüssigkeit nach der Dissoziation dieser Gruppen negativ geladen und werden deshalb von der positiven Ladung der Oberfläche des umgesetzten Siliziumdioxids elektrostatisch angezogen und fixiert.

Die Zusammensetzung des Reaktionsgemisches wird durch den pH-Zielwert und den gewünschten Kationisierungsgrad, der durch die Oberflächenladung charakterisiert wird, festgelegt. Diese beiden Grössen werden durch die Eigenschaften der Aluminium- und/oder Zirkoniumverbindung (Azidität, Pufferkapazität) und die Eigenschaften des Aminosilans (Basizität, Pufferkapazität) sowie deren Molekulargewicht beeinflusst.

Die Menge der Verbindungen des dreiwertigen Aluminiums oder des vierwertigen Zirkoniums oder eines Gemisches davon liegt typischerweise zwischen 0.1 Gewichtsprozent und 20 Gewichtsprozent bezogen auf die Menge des Siliziumdioxids. Bevorzugt ist ein Wert zwischen 0.5 Gewichtsprozent und 10 Gewichtsprozent.

Die Gesamtmenge des Aminoorganosilans beziehungsweise des Gemisches von Aminoorganosilanen gemäss Anspruch 1 liegt typischerweise zwischen 0.1 Gewichtsprozent und 10 Gewichtsprozent bezogen auf die Menge des Siliziumdioxids. Bevorzugt ist ein Wert zwischen 0.5 Gewichtsprozent und 20 Gewichtsprozent.

Das Gewichtsverhältnis zwischen der Verbindung des dreiwertigen Aluminiums (beispielsweise Aluminiumchlorhydrat) oder des vierwertigen Zirkoniums (beispielsweise Zirkonylchlorid) oder eines Gemisches davon und der bestimmten Aminoorganosilane wird vorteilhaft so gewählt, dass bei der Mischung der beiden Komponenten der beiden Reagenzien der gewünschte pH-Wert erreicht wird. Bevorzugt wird ein Molverhältnis zwischen 0.1 und 2.0, besonders bevorzugt ist ein Molverhältnis zwischen 0.4 und 1.5, bezogen auf die Anzahl der Aluminiumatome und/oder der Zirkoniumatome und die Anzahl k der Aminogruppen des Aminoorganosilans oder den Mittelwert der Anzahl der Aminogruppen der Aminoorganosilane.
Der pH-Wert des Gemischs, das die Reaktionsprodukte enthält, wird im wesentlichen durch die Azidität der Aluminium- und/oder Zirkoniumverbindung sowie durch das Verhältnis der Anzahl Aluminium- und/oder Zirkoniumionen zur gesamten Anzahl der Aminogruppen bestimmt. Der Substituent R₄ des Aminoorganosilans kann unter Berücksichtigung dieses Aspekts dementsprechend ausgewählt werden.

Der pH-Wert der Lösung, welche die Reaktionsprodukte der Verbindung des dreiwertigen Aluminiums oder des vierwertigen Zirkoniums oder eines Gemisches davon und des Aminoorganosilans enthält, wird vorteilhaft so gewählt, dass er zwischen 3 und 10 liegt.
Der pH-Wert der Dispersion kann durch Zugabe von anorganischen oder organischen Säuren, wie beispielsweise Essigsäure, gesenkt oder durch Zugabe von alkalischen anorganischen oder organischen Verbindungen, wie beispielsweise Natriumcarbonat, erhöht werden. Die sauren oder alkalischen Verbindungen können entweder dem Gemisch, welches die Reaktionsprodukte der Verbindung des dreiwertigen Aluminiums und/oder des vierwertigen Zirkoniums oder eines Gemisches davon und des Aminoorganosilans enthält, beigegeben werden oder nach der Zugabe des pyrogenen Siliziumdioxids.

Das Verhältnis der Anzahl der Siliziumatome zur Anzahl der Aluminiumatome und/oder Zirkoniumatome ist wichtig für die Struktur der gebildeten Reaktionsprodukte.

Das Aufzeichnungsmaterial kann neben dem erfindungsgemäss oberflächenmodifiziertem Siliziumdioxid zusätzlich noch andere, poröse oder nichtporöse, anorganische Verbindungen enthalten.

Zur Verbesserung der Stabilität der Bilder in verunreinigter Luft kann das erfindungsgemässe Aufzeichnungsmaterial neben dem oberflächenmodifiziertem Siliziumdioxid zusätzlich noch Salze des einwertigen Kupfers wie Kupfer(I)-Chlorid, Kupfer(I)-Bromid oder Kupfer(I)-Sulfit-Monohydrat, wie es in der Patentanmeldung EP 1'231'071 beschrieben worden ist, enthalten.

Zur weiteren Verbesserung der Stabilität der Bilder in verunreinigter Luft können dem erfindungsgemässen Aufzeichnungsmaterial neben den Salzen des einwertigen Kupfers zusätzlich Diketon-Verbindungen, wie in der Patentanmeldung EP 1'197'345 beschrieben worden ist, zugesetzt werden.

Zur nochmaligen Verbesserung der Stabilität der Bilder in verunreinigter Luft kann das Aufzeichnungsmaterial zusätzlich noch organische Schwefelverbindungen wie beispielsweise Thiodiethylenglykol enthalten.

Die Bindemittel sind im allgemeinen wasserlösliche Polymere. Besonders bevorzugt sind filmbildende Polymere.

Die wasserlöslichen Polymere umfassen beispielsweise natürliche oder daraus hergestellte modifizierte Verbindungen wie Albumin, Gelatine, Kasein, Stärke, Gummi arabicum, Natrium- oder Kaliumalginat, Hydroxyethylcellulose, Carboxymethylcellulose, α-, β- oder γ-Cyclodextrin usw. Wenn eines der wasserlöslichen Polymere Gelatine ist, so können alle bekannten Gelatinetypen verwendet werden, wie saure Schweinehautgelatine oder alkalische Knochengelatine, sauer oder basisch hydrolysierte Gelatinen, wie auch substituierte Gelatinen, beispielsweise phthalierte, acetylierte oder carbamoylierte Gelatine, oder mit Trimellithsäureanhydrid umgesetzte Gelatine.
Synthetische Bindemittel können ebenfalls verwendet werden und umfassen beispielsweise Polyvinylalkohol, Polyvinylpyrrolidon, vollständig oder teilweise verseifte Verbindungen von Copolymeren aus Vinylacetat und anderen Monomeren; Homopolymere oder Copolymere von ungesättigten Carbonsäuren wie Maleinsäure, (Meth)acrylsäure, Crotonsäure usw.; Homopolymere oder Copolymere aus sulfonierten Vinylmonomeren wie beispielsweise Vinylsulfonsäure, Styrolsulfonsäure usw. Ebenfalls können Homopolymere oder Copolymere aus Vinylmonomeren von (Meth)acrylamid; Homopolymere oder Copolymere anderer Monomerer mit Ethylenoxid; Polyurethane; Polyacrylamide; Polyester; Polyvinyllactame; Acrylamidpolymere; substituierter Polyvinylalkohol; Polyvinylacetale; Polymere aus Alkyl- und Sulfoalkylacrylaten und -methacrylaten; hydrolysierte Polyvinylacetate; Polyamide; Polyvinylpyridine; Polyacrylsäure; Copolymere mit Maleinsäureanhydrid; Polyalkylenoxide; Copolymere mit Methacrylamid und Copolymere mit Maleinsäure eingesetzt werden. Alle diese Polymere können auch als Mischungen verwendet werden.
Weiter können auch kationische Polymere und Beizmittel verwendet werden, wie beispielsweise Polyallylamine, Polyethylenimine, mit Aminogruppen substituierter Polyvinylalkohol oder mit Aminogruppen substituierte Polyurethane.
Bevorzugte synthetische Bindemittel sind Polyvinylalkohol und Polyvinylpyrrolidon oder ihre Mischungen.

Diese Polymere können mit wasserunlöslichen natürlichen oder synthetischen hochmolekularen Verbindungen gemischt werden, insbesondere mit Acryllatices oder Styrolacryllatices.
Obwohl wasserunlösliche Bindemittel nicht explizit beansprucht werden, so sollen wasserunlösliche Polymere trotzdem als Systembestandteil angesehen werden.

Die oben erwähnten Polymere mit vernetzbaren Gruppen können mit Hilfe eines Vernetzers oder Härters zu praktisch wasserunlöslichen Schichten umgesetzt werden. Solche Vernetzungen können kovalent oder ionisch sein. Die Vernetzung oder Härtung der Schichten erlaubt eine Veränderung der physikalischen Schichteigenschaften, wie beispielsweise der Flüssigkeitsaufnahme, oder der Widerstandsfähigkeit gegen Schichtverletzungen.
Die Vernetzer und Härter werden auf Grund der zu vernetzenden wasserlöslichen Polymere ausgesucht.
Organische Vernetzer und Härter umfassen z. B. Aldehyde (wie Formaldehyd, Glyoxal oder Glutaraldehyd); N-Methylolverbindungen (wie Dimethylolharnstoff oder Methylol-Dimethylhydantoin); Dioxane (wie 2,3-Dihydroxydioxan); reaktive Vinylverbindungen (wie 1,3,5-Trisacryloyl-Hexahydro-s-Triazin oder Bis-(Vinylsulfonyl)ethylether), reaktive Halogenverbindungen (wie 2,4-Dichloro-6-Hydroxy-s-Triazin); Epoxide; Aziridine; Carbamoylpyridinverbindungen oder Mischungen zweier oder mehrere dieser erwähnten Vernetzer.
Anorganische Vernetzer und Härter umfassen beispielsweise Chromalaun, Aluminiumalaun oder vorzugsweise Borsäure.
Die Schichten können auch reaktive Substanzen enthalten, welche die Schichten unter Einwirkung von UV-Licht, Elektronenstrahlen, Röntgenstrahlen oder Wärme vernetzen.

Die Schichten können weiter durch den Zusatz von Füllstoffen modifiziert werden. Mögliche Füllstoffe sind z. B. Kaolin, Calcium- oder Barium-Carbonate, Siliziumdioxid, Titandioxid, Bentonite, Zeolite, Aluminiumsilikat oder Calciumsilikat. Auch inerte organische Partikeln wie beispielsweise Kunststoffkügelchen können verwendet werden. Diese Kügelchen können aus Polyacrylaten, Polyacrylamiden, Polystyrol oder verschiedenen Copolymeren aus Acrylaten und Styrol bestehen. Die Füllstoffe werden auf Grund des beabsichtigten Gebrauchs der hergestellten Bilder ausgewählt. Einige dieser Füllstoffe können in transparenten Materialien nicht verwendet werden. Sie können aber positive Wirkungen in Aufsichtsmaterialien besitzen. Sehr oft erreicht man mit dem Einsatz solcher Füllstoffe eine gewünschte matte Oberfläche.

In den erfindungsgemässen Aufzeichnungsmaterialien ist mindestens eine Tintenaufnahmeschicht nebst allfälligen Hilfsschichten auf einen Träger aufgebracht.
Es ist vorteilhaft, auf die Tintenaufnahmeschicht eine glanzverbessernde Schicht aufzubringen, welche kleine Pigmentpartikel, wie beispielsweise kolloidales Siliziumdioxid, kolloidales Aluminiumoxid, kolloidales Aluminiumoxid/hydroxid oder organische Pigmente mit einem mittleren Teilchendurchmesser bis 200 nm enthält. Diese glanzverbessernde Schicht wird in einer Menge bis 5 g/m², bevorzugt einer Menge bis 3 g/m², auf die Tintenaufnahmeschicht aufgebracht. Diese glanzverbessernden Schichten können zusätzlich eine kleine Menge grösserer Pigmentpartikel mit einer Grösse von mindestens 1 µm enthalten, um den Durchgang durch den Tintenstrahldrucker zu verbessern. Als Pigmentpartikel mit einer Grösse von mindestens 1 µm können anorganische oder organische Pigmente verwendet werden. Besonders bevorzugt sind organische Teilchen, insbesondere Teilchen aus Polystyrol, da diese den Glanz des Aufzeichnungsmaterials nicht vermindern.

Eine grosse Vielfalt an Trägern ist bekannt und wird auch eingesetzt. So können alle Träger, die bei der Herstellung von photographischen Materialien verwendet werden, eingesetzt werden. Verwendet werden beispielsweise transparente Träger aus Celluloseestern wie Cellulosetriacetat, Celluloseacetat, Cellulosepropionat, oder Celluloseacetat/butyrat, Polyester wie Polyethylenterephthalat oder Polyethylennaphthalat, Polyamide, Polycarbonate, Polyimide, Polyolefine, Polyvinylacetale, Polyether, Polyvinylchlorid und Polyvinylsulfone. Bevorzugt werden Polyester, insbesondere Polyethylenterephthalat oder Polyethylennaphthalat wegen ihrer ausgezeichneten Dimensionsstabilität. Bei den in der photographischen Industrie eingesetzten opaken Trägern können beispielsweise Barytpapier, mit Polyolefinen beschichtete Papiere, weissopake Polyester wie beispielsweise Melinex^{®} der Firma DuPont eingesetzt werden. Besonders bevorzugt sind polyolefinbeschichtete Papiere oder weissopaker Polyester.
Es ist vorteilhaft, diese Träger, insbesondere Polyester, vor dem Beguss mit einer Substrierschicht zu versehen, um die Haftung der Tintenaufnahmeschichten auf dem Träger zu verbessern. Solche Substrierschichten sind in der photographischen Industrie wohlbekannt und enthalten z. B. Terpolymere aus Vinylidenchlorid, Acrylnitril und Acrylsäure oder aus Vinylidenchlorid, Methylacrylat und Itaconsäure. An Stelle der Substrierschicht oder zusätzlich zur Substrierschicht können die Träger vor dem Beguss auch einer Coronaentladung ausgesetzt werden. Ebenfalls als Träger können unbeschichtete Papiere verschiedener Typen verwendet werden, die in ihrer Zusammensetzung und in ihren Eigenschaften grosse Unterschiede aufweisen können. Pigmentierte Papiere und Hochglanzpapiere können ebenfalls verwendet werden, wie auch Metallfolien beispielsweise aus Aluminium.
Die Schichten können ebenfalls auf textile Fasermaterialien aus beispielsweise Polyamiden, Polyester, Baumwolle, Viskose und Wolle aufgebracht werden.

Die erfindungsgemässen Tintenaufnahmeschichten werden im allgemeinen aus wässrigen Lösungen oder Dispersionen, die alle nötigen Komponenten enthalten, gegossen. In vielen Fällen werden Netzmittel als Begusshilfsmittel zugesetzt, um das Giessverhalten und die Schichtgleichmässigkeit zu verbessern. Neben ihrer Wirkung während des Giessvorgangs können diese Verbindungen auch einen Einfluss auf die Bildqualität haben und können deshalb dementsprechend ausgewählt werden. Besonders bevorzugt werden Netzmittel mit einem HLB-Wert (HLB: englische Abkürzung von hydrophilic-lipophilic-balance) zwischen 9 und 13. Obwohl solche oberflächenaktiven Verbindungen in der Erfindung nicht beansprucht werden, bilden sie trotzdem einen wesentlichen Bestandteil der Erfindung.

Zusätzlich zu den schon erwähnten Bestandteilen können die erfindungsgemässen Aufzeichnungsmaterialien zusätzliche Verbindungen enthalten, um seine Eigenschaften weiter zu verbessern, so beispielsweise optische Aufheller zur Verbesserung des Weissgrades. Besonders bevorzugte optische Aufheller sind Stilbene, Cumarine, Triazine, und Oxazole.
Zur Verbesserung der Lichtechtheit können UV-Absorber, wie 2-Hydroxybenztriazole, 2-Hydroxybenzophenone, Triazin-Derivate oder Zimtsäure-Derivate. Die Menge des UV-Absorbers beträgt 200 mg/m² bis 2000 mg/m², vorzugsweise 400 mg/m² bis 1000 mg/m². Der UV-Absorber kann in jede Schicht des erfindungsgemässen Aufzeichnungsmaterials eingebracht werden, besonders vorteilhaft ist aber, wenn er in die oberste Schicht eingebracht wird.
Es ist weiter bekannt, dass die im Tintenstrahldruck hergestellten Bilder durch den Zusatz von Radikalfängern, Stabilisatoren, Reduktionsmitteln und Antioxidanzien geschützt werden können. Beispiele solcher Verbindungen sind sterisch gehinderte Phenole, sterisch gehinderte Amine, Chromanole, Ascorbinsäure, Phosphinsäuren und deren Derivate, schwefelhaltige Verbindungen wie Sulfide, Mercaptane, Thiocyanate, Thioamide oder Thioharnstoffe.
Die erwähnten Verbindungen können als wässrige Lösungen zu den Giesslösungen zugesetzt werden. Falls die Verbindungen nicht genügend wasserlöslich sind, können sie durch andere, bekannte Verfahren in die Giesslösungen eingebracht werden. So können die Verbindungen beispielsweise in einem mit Wasser mischbaren organischen Lösungsmittel wie niedere Alkohole, Glykole, Ketone, Ester oder Amide gelöst werden. Es ist auch möglich, die Verbindungen als feinkörnige Dispersionen, als Ölemulsionen, als Cyclodextran-Einschlussverbindungen oder als Latex, der die Verbindung enthält, in die Giesslösung einzubringen.

Normalerweise hat das erfindungsgemässe Aufzeichnungsmaterial eine Trockenschichtdicke von 0.5 µm bis 100 µm, insbesondere aber von 5 µm bis 50 µm.

Die Giesslösungen können auf verschiedene Arten auf den Träger aufgebracht werden. Die Giessverfahren schliessen beispielsweise den Extrusionsguss, den Luftmesserguss, den Schlitzguss, den Kaskadenguss und den Vorhangguss ein. Die Giesslösungen können auch mit einem Sprühverfahren aufgebracht werden. Die Tintenaufnahmeschichten können aus mehreren Einzelschichten bestehen, die einzeln nacheinander oder gemeinsam aufgebracht werden können.
Die Einzelschichten können sich in der Art des verwendeten pyrogenen Siliziumdioxids (insbesondere seiner spezifischer Oberfläche), der Umsetzung mit den Reaktionsprodukten aus einer Verbindung des dreiwertigen Aluminiums und mindestens eines Aminoorganosilans, im Verhältnis der Bindemittel zum Siliziumdioxid und in der Härtermenge unterscheiden.
Ein Träger kann auch beidseitig mit Tintenaufnahmeschichten begossen werden. Es ist auch möglich, auf der Rückseite eine antistatische Schicht oder eine Schicht zur Verbesserung der Planlage aufzubringen. Das gewählte Giessverfahren schränkt die Erfindung aber in keiner Art und Weise ein.

Tinten für den Tintenstrahldruck bestehen im wesentlichen aus einer flüssigen Trägersubstanz und einem darin gelösten oder dispergierten Farbstoff oder Pigment. Die flüssige Trägersubstanz für Tintenstrahldrucktinten ist im allgemeinen Wasser oder eine Mischung aus Wasser und einem mit Wasser mischbaren Lösungsmittel wie Ethylenglykol, Glykole mit höherem Molekulargewicht, Glycerin, Dipropylenglykol, Polyethylenglykol, Amide, Polyvinylpyrrolidon, N-Methylyrrolidon, Cyclohexylpyrrolidon, Carbonsäuren und deren Ester, Ether, Alkohole, organische Sulfoxide, Sulfolan, Dimethylformamid, Dimethylsulfoxid, Cellosolve, Polyurethane und Acrylate.
Die nichtwässrigen Tintenbestandteile dienen allgemein als Feuchthalter, Hilfslösungsmittel, Viskositätsregler, Eindringhilfsmittel oder Trocknungsbeschleuniger. Die organischen Verbindungen besitzen meistens einen Siedepunkt, der über dem von Wasser liegt. Tinten für den kontinuierlichen Tintenstrahldruck können weiter anorganische oder organische Salze zur Erhöhung der Leitfähigkeit enthalten. Beispiele solcher Salze sind Nitrate, Chloride, Phosphate, und die wasserlöslichen Salze wasserlöslicher organischer Säuren wie Acetate, Oxalate und Citrate. Die Farbstoffe oder Pigmente, die zur Herstellung der zusammen mit den erfindungsgemässen Aufzeichnungsmaterialien verwendbaren Tinten eingesetzt werden können, enthalten praktisch alle bekannten Klassen dieser farbigen Verbindungen. Typische Beispiele verwendeter Farbstoffe oder Pigment sind in der Patentanmeldung EP 0'559'324 aufgeführt. Die erfindungsgemässen Aufzeichnungsmaterialien können mit fast allen dem Stand der Technik entsprechenden Tinten verwendet werden.

Zusätzlich können die Tinten weitere Zusätze enthalten wie oberflächenaktive Substanzen, optische Aufheller, UV-Absorber, Lichtstabilisatoren, Konservierungsmittel, Fällmittel wie mehrfach geladene Metallverbindungen und polymere Verbindungen.
Die Beschreibung der Tinten dient nur als Illustration und ist in bezug auf die Erfindung in keiner Weise einschränkend.
Die vorliegende Erfindung wird durch die folgenden Beispiele näher beschrieben, ohne dass sie dadurch in irgendeiner Weise eingeschränkt würde.

### Prüfungen

### 1. Gelbfärbung in flüssiger Phase

2.2 g Chloraluminiumhydrat (Locron P, erhältlich bei Clariant AG, Muttenz, Schweiz) (0.01 Mol) unter starkem Rühren bei Raumtemperatur in 170 g demineralisiertem Wasser aufgelöst. Nach 5 Minuten werden 0.02/k Mol Aminoorganosilan oder eines Gemisches von Aminoorganosilanen unter starkem Rühren zugegeben, wobei k die Anzahl der Aminogruppen im Aminoorganosilan oder einen Mittelwert der Anzahl Aminogruppen der einzelnen Aminoorganosilane des Gemisches bedeutet. Nach weiteren 5 Minuten werden 10.2 g 1 N Salzsäure (0.01 Mol) zudosiert, anschliessend 11.6 g einer wässrigen Lösung (10 %) von Glyoxal (erhältlich bei Fluka AG, Buchs, Schweiz) zugegeben und das Endgewicht mit demineralisiertem Wasser auf 200 g eingestellt. Die Absorption der Lösung bei einer Wellenlänge von 400 nm wird unmittelbar darauf mit einem Spektralphotometer Varian Cary100 Bio (erhältlich bei Varian AG, Steinhausen, Schweiz) in einer Schichtdicke von 1 cm gemessen. Nach einer Lagerung der Lösung während 24 Stunden bei Raumtemperatur wird die Absorption nochmals gemessen. Die Differenz der beiden Messwerte ist ein Mass für die Gelbfärbung in wässriger Lösung.

### 2. Gelbfärbung in Kartonschachteln

Da die Gelbfärbung von unbedrucktem Aufzeichnungsmaterial in Kartonschachteln ein langsamer Vorgang ist, wird für die Prüfung das folgende beschleunigte Verfahren angewandt, um innert nützlicher Frist zu Ergebnissen zu kommen. Blätter des zu prüfenden Aufzeichnungsmaterial der Grösse 2 cm x 10 cm werden aufeinander gelegt und in eine weisse Kartonschachtel PrintPac (Ilford-Artikelnummer 116'194) der Grösse 21.5 cm x 30.5 cm x 1.5 cm verpackt.
Auf diese Blätter des Aufzeichnungsmaterials wird ein dicht gepackter Stapel von 1.3 cm Höhe des gleichen Kartons wie derjenige der Kartonschachtel gelegt. Die verschlossene Schachtel wird anschliessend in eine gasdichte Verbundfolie, welche innen eine dünne Aluminiumschicht enthält, eingeschweisst und 5 Tage bei einer Temperatur von 60° C in einem Salvis-Trockenschrank gelagert.
Nachher werden die L*a*b*-Werte der Muster mit einem Spektrometer Spectrolino, erhältlich bei Gretag Macbeth, Regensdorf, Schweiz, mit der Lichtart D₆₅ durch ein UV-Filter gemessen und mit den vor der Lagerung gemessenen Werten verglichen. Die Änderung Δb* des b*-Wertes ist ein Mass für die Gelbfärbung des Aufzeichnungsmaterials während der Lagerung im Trockenschrank.

### Beispiele 1 bis 11 und Versuchsbeispiele C - 1 bis C - 8

Die Mengen und die Art der eingesetzten Verbindungen des dreiwertigen Aluminiums, des vierwertigen Zirkoniums oder eines Gemisches davon, des Aminoorganosilans oder des Gemisches von Aminoorganosilanen und des pyrogenen Siliziumdioxids für die Beispiele 1 bis 11 sind in Tabelle 1 zusammengestellt.
Die Mengen und die Art der eingesetzten Verbindungen des dreiwertigen Aluminiums, des vierwertigen Zirkoniums oder eines Gemisches davon, des Aminoorganosilans oder des Gemisches von Aminoorganosilanen und des pyrogenen Siliziumdioxids für die Vergleichsbeispiele C - 1 bis C - 8 können Tabelle 2 entnommen werden.

### Dispersion

Die Verbindung des dreiwertigen Aluminiums oder des vierwertigen Zirkoniums oder das Gemisch davon wurden bei einer Temperatur von 20° C in 700 g demineralisiertem Wasser aufgelöst und unter sehr guter Rührung mit dem Aminoorganosilan oder dem Gemisch der Aminoorganosilane versetzt. Nach 15 Minuten Reaktionszeit (Bildung der Reaktionsprodukte aus der Verbindung des dreiwertigen Aluminiums oder des vierwertigen Zirkoniums und dem Aminoorganosilan) wurden 200 g des pyrogenen Siliziumdioxids portionenweise unter sehr guter Rührung bei hohen Scherraten zugegeben. Nach beendeter Zugabe des pyrogenes Siliziumdioxids wurde die Dispersion während 15 Minuten mit einem Rotor-Stator-Mixer gerührt. Anschliessend wurde die Dispersion auf eine Temperatur von 50° C aufgeheizt und zur Oberflächenmodifizierung des Siliziumdioxids 1 Stunde bei dieser Temperatur gehalten. Zum Schluss wurde die Lösung auf Raumtemperatur abgekühlt und mit demineralisiertem Wasser auf ein Endgewicht von 1000 g eingestellt.

### Giesslösung

66 g einer wässrigen Lösung (8 %) des Polyvinylalkohols Mowiol 4088 (erhältlich als bei Clariant AG, Muttenz, Schweiz) wurden auf eine Temperatur von 45° C erhitzt und mit 0.8 g einer wässrigen Lösung (5.23 %) des Netzmittels Olin 10G (erhältlich bei Arch Chemicals, Norwalk, USA) versetzt. Anschliessend wurden 120 g der obigen Dispersion, in welcher 0.92 g feste Borsäure gelöst worden waren, unter mässigem Rühren zugegeben. Die Giesslösung wurde zum Schluss mit demineralisiertem Wasser auf ein Endgewicht von 200 g verdünnt.

### Guss

140 g/m² dieser Giesslösung wurden bei einer Temperatur von 45° C mittels eines Stabgiessers auf einen polyethylenbeschichteten Papierträger aufgebracht und anschliessend wurde der begossene Träger 60 Minuten bei einer Temperatur von 35° C getrocknet. 1 m² des getrockneten Aufzeichnungsmaterials enthält 16.8 g des eingesetzten, unmodifizierten pyrogenen Siliziumdioxids.

**Tabelle 1**

| Beispiel | Cab-o-sil | Aluminium- oder Zirkonium-Verbindung | | Aminoorganosilan | |
|---|---|---|---|---|---|
| | | Art | Menge (g) | Art | Menge (g) |
| 1 | M5 | Aluminiumchlorhydrat | 13.88 | N-(n-Butyl)-aminopropyltrimethoxysilan | 23.51 |
| 2 | M5 | Aluminiumchlorhydrat | 13.88 | N-(Ethyl)-aminoisobutyltrimethoxysilan | 22.17 |
| 3 | M5 | Aluminiumchlorhydrat | 13.88 | N-(Cyclohexyl)-aminomethyltriethoxysilan | 27.51 |
| 4 | M5 | Aluminiumchlorhydrat | 13.88 | N-(Ethyl)-aminoisobutyltrimethoxysilan | 11.09 |
| | | | | N-(n-Butyl)-aminopropyltrimethoxysilan | 11.75 |
| 5 | M5 | AlCl₃ · 6 H₂O | 4.02 | N-(n-Butyl)-aminopropyltrimethoxysilan | 23.51 |
| 6 | M5 | Al(NO₃)₃ · 9 H₂O | 8.37 | N-(n-Butyl)-aminopropyltrimethoxysilan | 23.51 |
| 7 | M5 | Al(HCOO)₃ | 5.39 | N-(n-Butyl)-aminopropyltrimethoxysilan | 23.51 |
| 8 | M5 | Al(CH₃CH(OH)COO)₃ | 6.86 | N-(n-Butyl)-aminopropyltrimethoxysilan | 23.51 |
| 9 | H5 | Aluminiumchlorhydrat | 13.88 | N-(n-Butyl)-aminopropyltrimethoxysilan | 23.51 |
| 10 | M5 | ZrOCl₂ · 8 H₂O | 11.80 | N-(n-Butyl)-aminopropyltrimethoxysilan | 23.51 |
| 11 | M5 | Aluminiumchlorhydrat ZrOCl₂ · 8 H₂O | 6.58 6.22 | N-(n-Butyl)-aminopropyltrimethoxysilan | 23.51 |

**Tabelle 2**

| Vergleichsbeispiel | Cab-o-sil | Aluminium- oder Zirkonium-Verbindung | | Aminoorganosilan | |
|---|---|---|---|---|---|
| | | Art | Menge (g) | Art | Menge (g) |
| C - 1 | M5 | Aluminiumchlorhydrat | 13.88 | N-(2-Aminoethyl)-3-aminopropyltrimethoxysilan | 11.10 |
| C - 2 | M5 | AlCl₃ · 6 H₂O | 4.02 | N-(2-Aminoethyl)-3-aminopropyltrimethoxysilan | 11.10 |
| C - 3 | M5 | Al(NO₃)₃ · 9 H₂O | 5.49 | N-(2-Aminoethyl)-3-aminopropyltrimethoxysilan | 11.10 |
| C - 4 | M5 | Al(HCOO)₃ | 3.40 | N-(2-Aminoethyl)-3-aminopropyltrimethoxysilan | 11.10 |
| C - 5 | M5 | Al(CH₃CH(OH)COO)₃ | 6.17 | N-(2-Aminoethyl)-3-aminopropyltrimethoxysilan | 11.10 |
| C - 6 | H5 | Aluminiumchlorhydrat | 13.88 | N-(2-Aminoethyl)-3-aminopropyltrimethoxysilan | 11.10 |
| C - 7 | M5 | ZrOCl₂ · 8 H₂O | 9.65 | N-(2-Aminoethyl)-3-aminopropyltrimethoxysilan | 11.10 |
| C - 8 | M5 | Aluminiumchlorhydrat ZrOCl₂ · 8 H₂O | 5.48 4.08 | N-(2-Aminoethyl)-3-aminopropyltrimethoxysilan | 11.10 |

### Ergebnisse

Die Ergebnisse der Messung der Gelbfärbung in flüssiger Phase sind in Tabelle 3 zusammengestellt.

**Tabelle 3**

| Aminoorganosilan | Zunahme der Absorption |
|---|---|
| N-(2-Aminoethyl)-3-aminopropyltrimethoxysilan | 1.38 |
| 3-Aminopropyltriethoxysilan | 0.20 |
| N-(n-Butyl)-aminopropyltrimethoxysilan | 0.00 |
| N-(Ethyl)-aminoisobutyltrimethoxysilan | 0.00 |
| N-(Cyclohexyl)-aminomethyltriethoxysilan | 0.00 |

Der Vergleich der Ergebnisse in Tabelle 3 zeigt sofort, dass die in der Patentanmeldung EP 1'655'348 speziell beanspruchten Aminoorganosilane N-(2-Aminoethyl)-3-aminopropyltrimethoxysilan und 3-Aminopropyltriethoxysilan allein in flüssiger Phase eine starke Erhöhung der Absorption zeigen, während die in der vorliegenden Patentanmeldung speziell beanspruchten Aminoorganosilane N-(n-Butyl)-aminopropyltrimethoxysilan, N-(Ethyl)-aminoisobutyltrimethoxysilan und N-(Cyclohexyl)-aminomethyltriethoxysilan keine Zunahme der Absorption zeigen.

Die Ergebnisse der Messung der Gelbfärbung in Kartonschachteln sind in Tabelle 4 zusammengestellt.
Die Ergebnisse sind in Untergruppen zusammengefasst, in denen jeweils die eingesetzte Verbindung des dreiwertigen Aluminiums und/oder des vierwertigen Zirkoniums die gleiche ist.

**Tabelle 4**

| Beispiel | Aminoorganosilan | Δb* |
|---|---|---|
| 1 | N-(n-Butyl)-aminopropyltrimethoxysilan | 1.52 |
| 2 | N-(Ethyl)-aminoisobutyltrimethoxysilan | 1.45 |
| 3 | N-(Cyclohexyl)-aminomethyltriethoxysilan | 1.06 |
| 4 | N-(Ethyl)-aminoisobutyltrimethoxysilan N-(n-Butyl)-aminopropyltrimethoxysilan | 1.24 |
| C - 1 | N-(2-Aminoethyl)-3-aminopropyltrimethoxysilan | 10.15 |
| 5 | N-(n-Butyl)-aminopropyltrimethoxysilan | 2.39 |
| C - 2 | N-(2-Aminoethyl)-3-aminopropyltrimethoxysilan | 13.60 |
| 6 | N-(n-Butyl)-aminopropyltrimethoxysilan | 2.01 |
| C - 3 | N-(2-Aminoethyl)-3-aminopropyltrimethoxysilan | 14.57 |
| 7 | N-(n-Butyl)-aminopropyltrimethoxysilan | 4.11 |
| C - 4 | N-(2-Aminoethyl)-3-aminopropyltrimethoxysilan | 12.04 |
| 8 | N-(n-Butyl)-aminopropyltrimethoxysilan | 2.54 |
| C - 5 | N-(2-Aminoethyl)-3-aminopropyltrimethoxysilan | 14.49 |
| 9 | N-(n-Butyl)-aminopropyltrimethoxysilan | 1.31 |
| C - 6 | N-(2-Aminoethyl)-3-aminopropyltrimethoxysilan | 11.32 |
| 10 | N-(n-Butyl)-aminopropyltrimethoxysilan | 2.33 |
| C - 7 | N-(2-Aminoethyl)-3-aminopropyltrimethoxysilan | 15.86 |
| 11 | N-(n-Butyl)-aminopropyltrimethoxysilan | 1.72 |
| C - 8 | N-(2-Aminoethyl)-3-aminopropyltrimethoxysilan | 13.51 |

Ein Vergleich der Ergebnisse der Beispiele und der Versuchsbeispiele in Tabelle 4 zeigt sofort, dass die Aufzeichnungsmaterialien der Vergleichsbeispiele C - 1 bis C - 8 eine viel stärkere Gelbfärbung in Kartonschachteln zeigen als die erfindungsgemässen Aufzeichnungsmaterialien der Beispiele 1 bis 15, wenn die Muster verglichen werden, in denen jeweils das gleiche pyrogene Siliziumdioxid und das gleiche Metallsalz eingesetzt wurde.

## Patentansprüche

1. Verfahren zur Herstellung von Dispersionen von oberflächenmodifiziertem Siliziumdioxid, **dadurch gekennzeichnet, dass** die Oberfläche des Siliziumdioxids mit den Reaktionsprodukten aus mindestens einer Verbindung des dreiwertigen Aluminiums und/oder des vierwertigen Zirkoniums und mindestens eines Aminoorganosilans modifiziert wird, **dadurch gekennzeichnet dass** eine bei Raumtemperatur hergestellte wässrige Lösung (200 g) von 0.01 Mol Aluminiumchlorhydrat, 0.02/k Mol Aminoorganosilan oder eines Gemisches von Aminoorganosilanen, 0.01 Mol Salzsäure und 0.02 Mol Glyoxal nach einer Lagerung während 24 Stunden bei Raumtemperatur bei einer Wellenlänge von 400 nm bei einer Schichtdicke von 1 cm eine Zunahme der Absorption von weniger als 0.05 zeigt, worin k die Anzahl der Aminogruppen im Aminoorganosilan oder einen Mittelwert der Anzahl Aminogruppen der einzelnen Aminoorganosilane des Gemisches bedeutet.

2. Verfahren zur Herstellung von Dispersionen von oberflächenmodifiziertem Siliziumdioxid gemäss Anspruch 1, **dadurch gekennzeichnet, dass** als Verbindung des dreiwertigen Aluminiums Aluminiumchlorid, Aluminiumnitrat, Aluminiumacetat, Aluminiumformiat, Aluminiumlactat, Aluminiumchlorhydrat oder Gemische dieser Verbindungen verwendet werden.

3. Verfahren zur Herstellung von Dispersionen von oberflächenmodifiziertem Siliziumdioxid gemäss Anspruch 1, **dadurch gekennzeichnet, dass** als Verbindung des vierwertigen Zirkoniums Zirkonylchlorid verwendet werden.

4. Verfahren zur Herstellung von Dispersionen von oberflächenmodifiziertem Siliziumdioxid gemäss den Ansprüchen 1 bis 3, **dadurch gekennzeichnet, dass** das Aminoorganosilan die Formel (I) besitzt 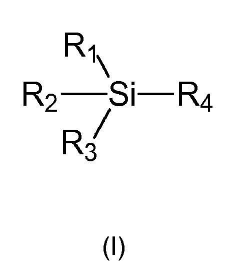 worin
R₁, R₂, R₃ unabhängig voneinander für Wasserstoff, einen Hydroxylrest, einen unsubstituierten oder substituierten Alkylrest mit 1 bis 6 Kohlenstoffatomen, einen unsubstituierten oder substituierten Arylrest, einen unsubstituierten oder substituierten Alkoxylrest mit 1 bis 6 Kohlenstoffatomen oder einen unsubstituierten oder substituierten Aryloxylrest stehen
und
R₄ für einen organischen Rest steht, der mit mindestens einer pri- mären, sekundären oder tertiären Aminogruppe substituiert ist.

5. Verfahren zur Herstellung von Dispersionen von oberflächenmodifiziertem Siliziumdioxid gemäss den Ansprüchen 1 bis 4, **dadurch gekennzeichnet, dass** die Substituenten von R₁, R₂ und R₃ unabhängig voneinander aus der Gruppe bestehend aus Thiol, Sulfid und Polyalkylenoxid ausgewählt werden.

6. Verfahren zur Herstellung von Dispersionen von oberflächenmodifiziertem Siliziumdioxid gemäss den Ansprüchen 1 bis 5, **dadurch gekennzeichnet, dass** das Aminoorganosilan aus der Gruppe bestehend aus N-(n-Butyl)-aminopropyltrimethoxysilan, N-(Ethyl)-aminoisobutyltrimethoxysilan, N-(Cyclohexyl)-aminomethyltriethoxysilan oder deren Gemischen ausgewählt wird.

7. Verfahren zur Herstellung von Dispersionen von oberflächenmodifiziertem Siliziumdioxid gemäss den Ansprüchen 1 bis 6, **dadurch gekennzeichnet, dass** die Menge der Verbindung des dreiwertigen Aluminiums und/oder des vierwertigen Zirkoniums zwischen 0.1 Gewichtsprozent und 20 Gewichtsprozent bezogen auf die Menge des Siliziumdioxids beträgt.

8. Verfahren zur Herstellung von Dispersionen von oberflächenmodifiziertem Siliziumdioxid gemäss den Ansprüchen 1 bis 7, **dadurch gekennzeichnet, dass** das Siliziumdioxid pyrogenes Siliziumdioxid ist.

9. Verfahren zur Herstellung von Dispersionen von oberflächenmodifiziertem Siliziumdioxid gemäss Anspruch 8, **dadurch gekennzeichnet, dass** das pyrogene Siliziumdioxid eine spezifische Oberfläche zwischen 20 m²/g und 400 m²/g hat.

10. Verfahren zur Herstellung von Dispersionen von oberflächenmodifiziertem Siliziumdioxid gemäss Anspruch 9, **dadurch gekennzeichnet, dass** zwei oder mehrere Arten von pyrogenem Siliziumdioxid mit unterschiedlichen spezifischen Oberflächen verwendet werden.

11. Verfahren zur Herstellung von Dispersionen von oberflächenmodifiziertem Siliziumdioxid gemäss Anspruch 10, **dadurch gekennzeichnet, dass** die Oberflächenmodifikation der verschiedenen Arten von Siliziumdioxid gleichzeitig in der Mischung erfolgt.

12. Verfahren zur Herstellung von Dispersionen von oberflächenmodifiziertem Siliziumdioxid gemäss Anspruch 10, **dadurch gekennzeichnet, dass** die Oberflächenmodifikation der verschiedenen Arten von Siliziumdioxid für jede Art selbständig erfolgt.

13. Aufzeichnungsmaterial für den Tintenstrahldruck, das auf einem Träger mindestens eine Tintenaufnahmeschicht bestehend aus mindestens einem Bindemittel und mindestens einer Dispersion von oberflächenmodifiziertem Siliziumdioxid gemäss den Ansprüchen 1 bis 12 enthält.

14. Aufzeichnungsmaterial für den Tintenstrahldruck gemäss Anspruch 13, **dadurch gekennzeichnet, dass** als Bindemittel Polyvinylalkohol, Gelatine, Derivate des Polyvinylalkohols, Polyvinylpyrrolidon oder Mischungen dieser Verbindungen verwendet werden.

15. Aufzeichnungsmaterial für den Tintenstrahldruck gemäss den Ansprüchen 13 und 14, **dadurch gekennzeichnet, dass** das Aufzeichnungsmaterial mit Borsäure gehärtet wird.

16. Aufzeichnungsmaterial für den Tintenstrahldruck gemäss den Ansprüchen 13 bis 15, **dadurch gekennzeichnet, dass** das Aufzeichnungsmaterial mehrere Tintenaufnahmeschichten besitzt.

17. Aufzeichnungsmaterial für den Tintenstrahldruck gemäss Anspruch 16, **dadurch gekennzeichnet, dass** in den verschiedenen Tintenaufnahmeschichten pyrogenes Siliziumdioxid mit unterschiedlichen spezifischen Oberflächen verwendet wird.

18. Aufzeichnungsmaterial für den Tintenstrahldruck gemäss Anspruch 16, **dadurch gekennzeichnet, dass** das in den verschiedenen Tintenaufnahmeschichten verwendete Siliziumdioxid sich in der Art der Umsetzung mit den Reaktionsprodukten mindestens einer Verbindung des dreiwertigen Aluminiums und/oder des vierwertigen Zirkoniums und mindestens eines Aminoorganosilans gemäss den Ansprüchen 1 bis 8 unterscheidet.

19. Aufzeichnungsmaterial für den Tintenstrahldruck gemäss Anspruch 16, **dadurch gekennzeichnet, dass** die verschiedenen Tintenaufnahmeschichten ein unterschiedliches Verhältnis von Bindemittel zu Siliziumdioxid besitzen.

20. Aufzeichnungsmaterial für den Tintenstrahldruck gemäss den Ansprüchen 15 und 16, **dadurch gekennzeichnet, dass** in den verschiedenen Tintenaufnahmeschichten unterschiedliche Mengen Borsäure verwendet werden.

21. Aufzeichnungsmaterial für den Tintenstrahldruck gemäss den Ansprüchen 13 bis 20, **dadurch gekennzeichnet, dass** als Träger beschichtetes oder unbeschichtetes Papier, durchsichtiger oder opaker Kunststoffträger bestehend aus Polyester oder Polypropylen oder textile Fasermaterialien verwendet werden.

22. Aufzeichnungsmaterial für den Tintenstrahldruck gemäss den Ansprüchen 13 bis 21, **dadurch gekennzeichnet, dass** das Aufzeichnungsmaterial mit Hilfe des Extrusions-, Luftmesser-, Schlitz-, Kaskaden- oder Vorhanggussverfahrens hergestellt wird.
